# EUROPEAN PATENT SPECIFICATION

(11) **EP 3 702 261 B1**
(45) Date of publication and mention of the grant of the patent: **10.01.2024**
(21) Application number: 18906664.0
(22) Date of filing: 26.11.2018
(51) Int. Cl.: B63B 13/00, B63J 2/12, F01N 3/08, F01N 3/04, F01N 13/00, B63J 2/00

(54) **SEAWATER CIRCULATION SYSTEM FOR SHIP**
SEEWASSERZIRKULATIONSSYSTEM FÜR EIN SCHIFF
SYSTÈME DE CIRCULATION D'EAU DE MER POUR NAVIRE

(30) Priority: 19.02.2018 KR 20180019235
(43) Date of publication of application: 02.09.2020
(73) Proprietor: Seo, Min Su, Seoul 06373 (KR)
(72) Inventor: Seo, Min Su, Seoul 06373 (KR)
(74) Representative: Müller Verweyen
(86) International application number: PCT/KR2018/014601
(87) International publication number: WO 2019/160224

(56) References cited:
- EP-A1- 2 574 393
- WO-A1-2017/043722
- FR-A1- 2 826 931
- JP-A- 2017 019 415
- KR-A- 20090 112 296
- KR-A- 20140 009 324
- KR-A- 20150 075 663
- KR-B1- 101 647 462
- US-A1- 2010 206 171

## Description

### [Technical Field]

The present invention relates to a seawater circulation system for a ship, and more particularly, to a seawater circulation system that supplies seawater for cooling a heat generation body of a ship and seawater for adsorbing sulfur oxide in a scrubber.

### [Background Art]

A ship includes various heat generation devices that generate heat while operating, such as an engine, a generator, a motor, an air conditioning system, and an air compressor. If the heat generated by the heat generation devices is not lowered, the heat generation devices may overheat so as to cause failure or fire. Accordingly, the ship uses a scheme of lowering the heat by supplying cooling water to the heat generation devices. In order to ensure an enormous amount of cooling water, seawater pumped from a sea chest is generally used as the cooling water.

In addition, an exhaust gas discharged from the engine of the ship contains sulfur oxide and the like, so that it is necessary to remove sulfur oxide by allowing the exhaust gas to pass through a scrubber before the exhaust gas is exhausted to an outside. In this case, the scrubber is a device in which multiple layers of corrugated plate materials are stacked to allow an exhaust gas to flow therebetween, and seawater is injected through a plurality of nozzles to remove sulfur oxide contained in the exhaust gas through adsorption between the seawater and sulfur oxide. The scrubber is also connected to the sea chest installed in the ship to receive the seawater.

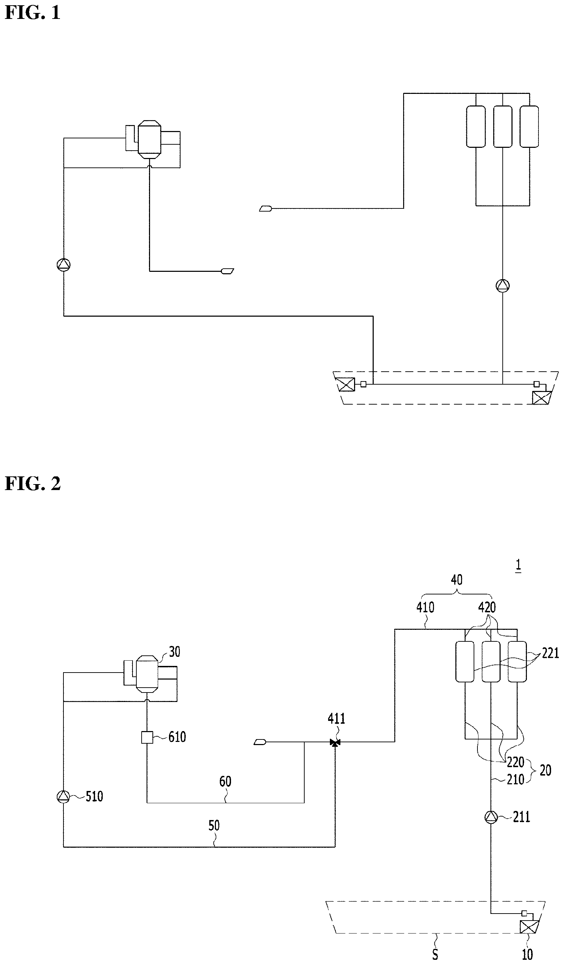

However, since the scrubber and each of the heat generation devices operated in an engine room consume an enormous amount of seawater, the scrubber and each of the heat generation devices have to be respectively connected to separate sea chests to receive seawater, and have to be respectively connected to separate discharge pipes installed on an outboard submerged area to discharge the seawater to the outside (see FIG. 1).

In other words, since the ship requires a plurality of sea chests, a proportion of the sea chest in the ship is increased, so that an available space in the ship may be decreased. In addition, since the sea chest has to be installed in a submerged area, and the discharge pipe has to be installed on the outboard submerged area, in order to install the sea chest and the discharge pipe, the ship has to be located on a dry dock, or a diver has to be employed, so that a high cost may be incurred.

Therefore, there is a demand for a seawater circulation system for a ship, capable of removing sulfur oxide in a scrubber by recirculating seawater, which is used as cooling water in a heat generation device that requires much seawater in the ship, into the scrubber without installing a sea chest and a discharge pipe for the scrubber and the heat generation device to supply the seawater to the heat generation device and the scrubber.

FR 2 826 931 A1 discloses a seawater circulation system according to the preamble of claim 1.

### [Disclosure]

### [Technical Problem]

A technical object to be achieved by the present invention is to provide a seawater circulation system for a ship, capable of removing sulfur oxide in a scrubber while lowering a temperature of a heat generation body through existing sea chest and a discharge pipe.

The technical objects to be achieved by the present invention are not limited to the above-described technical objects, and other technical objects that are not described above will be clearly understood by a person having ordinary skill in the art to which the invention pertains from the following description.

### [Technical Solution]

To achieve the objects described above, according to the present invention, there is provided a seawater circulation system for a ship having the features of claim 1.

According to one embodiment of the present invention, the supply pipe unit may have a second pump for pumping the seawater from the first discharge pipe unit.

According to one embodiment of the present invention, the heat generation body may include at least one of an oil cooler, an air cooler, and an engine coolant cooler.

According to one embodiment of the present invention, the seawater circulation system may further include: a separation unit coupled to the second discharge pipe unit to separate contaminants contained in a direct pipe unit or the seawater which is discharged from the scrubber unit.

### [Advantageous Effects]

According to an embodiment of the present invention, the seawater is supplied to the heat generation body as cooling water, and the seawater supplied to the heat generation body is reused so as to be used for removing sulfur oxide in the scrubber unit, so that a sufficient amount of water can be supplied to the heat generation body and the scrubber unit even with existing sea chest, and thus additional sea chests are not required.

In addition, according to one embodiment of the present invention, the temperature of the seawater discharged to the outside is lowered, so that damage to a marine ecosystem caused by high-temperature seawater can be minimized.

It should be understood that effects of the present invention are not limited to the above-described effects and include all effects that can be inferred from the configuration of the invention disclosed in the detailed description or the claims of the present disclosure.

### [Description of Drawings]

FIG. 1 is a view showing a conventional seawater circulation system.
FIG. 2 is a view showing a seawater circulation system according to one embodiment of the present invention.
FIG. 3 is a view showing a seawater circulation system according to another embodiment of the present invention.

### [Mode for Invention]

### [Best Mode]

Hereinafter, the present invention will be described with reference to the accompanying drawings. However, the present invention may be implemented in various other forms, and thus is not limited to the embodiments described herein. In addition, in the drawings, portions irrelevant to the description will be omitted in order to clearly describe the present invention, and like reference numerals refer to like elements throughout the specification.

Throughout the specification, when one element is described as being "connected (accessed, contacted, or coupled)" to another element, it shall be construed as being not only "directly connected" to the other element, but also "indirectly connected" to the other element with another member in between. In addition, when some part "includes" some elements, unless specifically described to the contrary, it means that other elements may be further included but not excluded.

The terms used herein are intended to describe certain embodiments only, and shall by no means limit the present invention. Unless the context clearly indicates otherwise, expressions in a singular form include a meaning of a plural form. In the present specification, the term such as "comprising" or "including" is intended to designate the presence of characteristics, numbers, steps, operations, elements, components, or combinations thereof disclosed herein, and shall not be construed to preclude any possibility of presence or addition of one or more other characteristics, numbers, steps, operations, elements, components, or combinations thereof.

Hereinafter, embodiments of the present invention will be described in detail with reference to the accompanying drawings.

FIG. 2 is a view showing a seawater circulation system 1 according to one embodiment of the present invention.

According to one embodiment of the present invention, a seawater circulation system 1 may include a sea chest 10, a cooling unit 20, a scrubber unit 30, a first discharge pipe unit 40, a supply pipe unit 50, and a second discharge pipe unit 60.

The sea chest 10 refers to a component for intake of cooling water and water required for a ship S, and may be coupled to a bottom of the ship S to draw seawater from sea.

The cooling unit 20 refers to a component for supplying the cooling water to a heat generation body 221, and may be coupled to the sea chest 10 to receive the seawater from the sea chest 10. In this case, the cooling unit 20 may have a first pump 211 for pumping the seawater from the sea chest 10. A pumping flow rate of the first pump 211 may be 500 m³/h.

In addition, the cooling unit 20 may be coupled to an inside or an outside of the heat generation body 221 so that heat may be exchanged between the heat generation body 221 and the seawater, and may be formed of a thermally conductive material for smooth heat exchange.

The cooling unit 20 may have a tubular shape, and when there are multiple heat generation bodies, the cooling unit 20 may branch to correspond to the number of heat generation bodies 221 so as to be coupled to the heat generation bodies 221, respectively. In other words, the cooling unit 20 may include one main pipe 210 connected to the sea chest and at least one branch pipe 220 that branches from the main pipe 210 to correspond to the number of heat generation bodies 221. In this case, the first pump 211 may be coupled to the main pipe 210 to easily transport the seawater to each branch pipe 220. Meanwhile, a flow path of the main pipe 210 may be wider than a flow path of the branch pipe 220 to facilitate a flow of the seawater.

Meanwhile, the heat generation body 221 may be at least one of an oil cooler, an air cooler, and an engine coolant cooler.

The scrubber unit 30 refers to a component for removing sulfur oxide contained in an exhaust gas, and may be coupled to an exhaust gas discharge unit of an internal combustion engine such as an engine of a ship to receive the exhaust gas from the internal combustion engine. In this case, the scrubber unit 30 may include a liquid dispersion unit (not shown) and a particle collection unit (not shown).

The first discharge pipe unit 40 refers to a component for discharging the seawater, which is discharged from the cooling unit 20, to an outside, may have a flow path communicating with a flow path of the cooling unit 20, and may have one end connected to the cooling unit 20 and an opposite end that is opened.

In this case, when there are a plurality of heat generation bodies 221, the first discharge pipe unit 40 may include a main pipe 410 and a branch pipe 420 that branches from the main pipe 410. The branch pipe 420 may branch to correspond to the number of heat generation bodies 221 so as to be coupled to the branch pipes 220 of the cooling unit 20, respectively. Meanwhile, a flow path of the main pipe 410 may be wider than a flow path of the branch pipe 420 to facilitate a flow of the seawater.

The supply pipe unit 50 refers to a component for supplying a part or all of the seawater discharged from the cooling unit 20 to the scrubber unit 30, may have a flow path communicating with the flow path of the cooling unit 20, and may have one end coupled to the scrubber unit 30 and an opposite end coupled to a middle of the first discharge pipe unit 40.

In this case, a first valve 411 for adjusting a flow rate may be provided at the opposite end of the supply pipe unit 50, that is, between the supply pipe unit 50 and the first discharge pipe unit 40. Depending on a state of the first valve 411, a flow path of the first discharge pipe unit 40 or the communication between the supply pipe unit 50 and the first discharge pipe unit 40 may be opened or blocked. In other words, the first valve 411 may be a three-way valve (3-way valve) for performing a function of blocking the flow path of the first discharge pipe unit 40 as well as blocking the communication between the supply pipe unit 50 and the first discharge pipe unit 40.

According to one embodiment of the present invention, the supply pipe unit 50 may have a second pump 510 for pumping the seawater from the first discharge pipe unit 40. A pumping flow rate of the second pump 510 may be 300 m³/h. In other words, the second pump 510 may have a smaller pumping flow rate than the first pump 211.

The second discharge pipe unit 60 refers to a component for discharging the seawater from the scrubber unit 30 to the first discharge pipe unit 40, may have a flow path communicating with the flow path of the first discharge pipe unit 40, and may have one end coupled to the scrubber unit 30 and an opposite end coupled to one region of the first discharge pipe unit 40, which is located between the supply pipe unit 50 and the opposite end of the first discharge pipe unit 40.

In this case, a separation unit 610 for removing contaminants contained in the seawater discharged from the scrubber unit 30 may be coupled to the second discharge pipe unit 60. When the separation unit 610 is coupled to the first discharge pipe unit 40 located between the supply pipe unit 50 and the opposite end of the first discharge pipe unit 40, the seawater discharged from the first discharge pipe unit 40, which does not contain the contaminants, may also be introduced into the separation unit 610, so that the separation unit 610 is required to have a large capacity. In other words, according to the present invention, only the seawater discharged from the second discharge pipe unit 60, which substantially contains the contaminants, is required to be treated, so that the separation unit 610 may have a small capacity.

Meanwhile, the cooling unit 20, the first discharge pipe unit 40, the supply pipe unit 50, and the second discharge pipe unit 60 may be formed of stainless steel or a material resistant to acid and corrosion to prevent corrosion or abrasion caused by the seawater.

According to the present invention, the seawater used as the cooling water in the heat generation body 221 is reused so as to be used for removing sulfur oxide in the scrubber unit 30, so that additional sea chests are not required. In other words, an available space of the ship S can be widened.

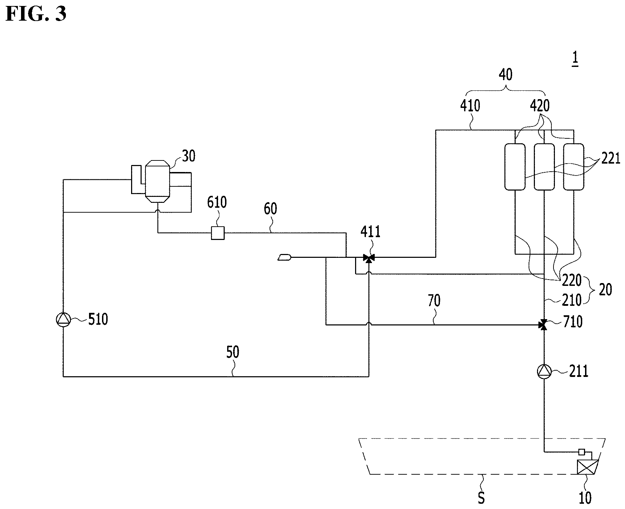

FIG. 3 is a view showing a seawater circulation system 1 according to another embodiment of the present invention.

According to another embodiment of the present invention, a seawater circulation system 1 may include a sea chest 10, a cooling unit 20, a scrubber unit 30, a first discharge pipe unit 40, a supply pipe unit 50, a second discharge pipe unit 60, and a circulation pipe unit 70. Components which are identical to the components of one embodiment described above will be denoted by the same reference numerals, and the descriptions thereof will be omitted.

The circulation pipe unit 70 refers to a component for lowering a temperature of the seawater located in the flow path of the first discharge pipe unit 40, and may have both ends coupled to the cooling unit 20. In more detail, the circulation pipe unit 70 may have the both ends coupled to the main pipe 210 located between the first pump 211 and the heat generation body 221, and may have at least one region located inside or outside the first discharge pipe unit 40. Therefore, the seawater moved by the first pump 211 may be moved to the circulation pipe unit 70 and the heat generation body 221.

In addition, a flow path of the circulation pipe unit 70 may be smaller than the flow path of the cooling unit 20, so that only a part of the seawater located in the cooling unit 20 may be moved to the circulation pipe unit 70. In other words, a part of the seawater moved from the sea chest 10 to the cooling unit may be moved to the circulation pipe unit 70, and the remaining part of the seawater may be moved to the heat generation body 221.

According to the present invention, a second valve 710 for adjusting a flow rate may be provided between the circulation pipe unit 70 and the main pipe 210 of the cooling unit 20. Depending on a state of the second valve 710, the communication between the main pipe 210 and the circulation pipe unit 70 may be opened or blocked. Therefore, according to the present invention, the main pipe 210 and the circulation pipe unit 70 may communicate each other only when the seawater located in the first discharge pipe unit 40 is required to be cooled.

As described above, according to the present invention, the temperature of the seawater located in the flow path of the first discharge pipe unit 40 is lowered by using the circulation pipe unit 70, so that damage to a marine ecosystem caused by high-temperature seawater can be minimized.

The above description of the present invention has been provided for illustrative purposes only, and it is to be understood by a person having ordinary skill in the art to which the invention pertains that the present invention can be easily embodied in other specific forms without changing the technical idea or essential properties of the present invention. Therefore, the embodiments described above are illustrative in all aspects, and should not be construed as limiting. For example, each element described as a single type may be implemented in a distributed manner, and similarly, elements described as being distributed may be implemented in a coupled manner.

The scope of the present invention is defined by the appended claims, and should be construed as encompassing all changes or modifications conceived from the meaning, scope, and equivalent concepts of the claims.

## Claims

1. A seawater circulation system (1) for a ship, the seawater circulation system comprising:
a sea chest (10) for pumping seawater from sea;
a cooling unit (20) coupled to the sea chest (10) to receive the seawater from the sea chest (10), and partially coupled to a heat generation body (221) to lower a temperature of the heat generation body (221) through heat exchange;
a scrubber unit (30) for treating an exhaust gas generated in the ship;
a first discharge pipe unit (40) for discharging the seawater discharged from the cooling unit (20) to an outside;
a supply pipe unit (50) coupled to the first discharge pipe unit (40) and the scrubber unit (30) to supply a part or all of the seawater discharged from the cooling unit (20) to the scrubber unit (30);
a second discharge pipe unit (60) coupled to the scrubber unit (30) and the first discharge pipe unit (40) to discharge the seawater from the scrubber unit (30) to the first discharge pipe unit (40);
a first pump (211) provided in the cooling unit (20) to pump the seawater from the sea chest (10);
wherein a first valve (411) for adjusting a flow rate is provided between the first discharge pipe unit (40) and the supply pipe unit (50); **characterized by** comprising
a circulation pipe unit (70) having both ends coupled to the cooling unit (20), which is located between the first pump (211) and the heat generation body (221), to allow the seawater to circulate therethrough,
wherein the circulation pipe unit (70) is at least partially located inside or outside the first discharge pipe unit (40) to lower a temperature of the seawater located in the first discharge pipe unit (40), and has a flow path which is smaller than a flow path of the cooling unit (20) to receive a part of the seawater located in the cooling unit (20),
wherein a second valve (710) for adjusting a flow rate is provided between the circulation pipe unit (70) and a main pipe (210) of the cooling unit (20), wherein depending on a state of the second valve (710), communication between the main pipe (210) and the circulation pipe unit (70) is opened or blocked.

2. The seawater circulation system of claim 1, wherein the supply pipe unit (50) has a second pump (510) for pumping the seawater from the first discharge pipe unit (40).

3. The seawater circulation system of claim 1, wherein the heat generation body (211) includes at least one of an oil cooler, an air cooler, and an engine coolant cooler.

4. The seawater circulation system of claim 2, further comprising a separation unit (610) coupled to the second discharge pipe unit (60) to separate contaminants contained in the seawater which is discharged from the scrubber unit (30).

## Patentansprüche

1. Ein Meerwasser-Zirkulationssystem (1) für ein Schiff, wobei das Meerwasser-Zirkulationssystem umfasst:
einen Meerwasserkasten (10) zum Pumpen von Meerwasser aus dem Meer;
eine Kühleinheit (20), die mit dem Meerwasserkasten (10) gekoppelt ist, um das Meerwasser aus dem Meerwasserkasten (10) aufzunehmen, und die teilweise mit einem Wärmeerzeugungskörper (221) gekoppelt ist, um eine Temperatur des Wärmeerzeugungskörpers (221) durch Wärmeaustausch zu senken;
eine Wäschereinheit (30) zur Behandlung eines im Schiff erzeugten Abgases;
eine erste Ableitungsrohreinheit (40) zum Ableiten des von der Kühleinheit (20) abgeleiteten Meerwassers nach außen;
eine Zufuhrrohreinheit (50), die mit der ersten Ableitungsrohreinheit (40) und der Wäschereinheit (30) verbunden ist, um einen Teil oder das gesamte von der Kühleinheit (20) abgeleitete Meerwasser der Wäschereinheit (30) zuzuführen;
eine zweite Ableitungsrohreinheit (60), die mit der Wäschereinheit (30) und der ersten Ableitungsrohreinheit (40) verbunden ist, um das Meerwasser von der Wäschereinheit (30) zur ersten Ableitungsrohreinheit (40) abzuleiten;
eine erste Pumpe (211), die in der Kühleinheit (20) vorgesehen ist, um das Meerwasser aus dem Meerwasserkasten (10) zu pumpen;
wobei ein erstes Ventil (411) zum Einstellen einer Durchflussrate zwischen der ersten Ableitungsrohreinheit (40) und der Zufuhrrohreinheit (50) vorgesehen ist;
**dadurch gekennzeichnet, dass** es eine Zirkulationsrohreinheit (70) umfasst, deren beide Enden mit der Kühleinheit (20) gekoppelt sind, die sich zwischen der ersten Pumpe (211) und dem Wärmeerzeugungskörper (221) befindet, damit das Meerwasser durch diese zirkulieren kann,
wobei die Zirkulationsrohreinheit (70) zumindest teilweise innerhalb oder außerhalb der ersten Ableitungsrohreinheit (40) angeordnet ist, um eine Temperatur des in der ersten Ableitungsrohreinheit (40) befindlichen Meerwassers zu senken, und einen Strömungsweg aufweist, der kleiner als ein Strömungsweg der Kühleinheit (20) ist, um einen Teil des in der Kühleinheit (20) befindlichen Meerwassers aufzunehmen,
wobei ein zweites Ventil (710) zum Einstellen einer Durchflussrate zwischen der Zirkulationsleitungseinheit (70) und einer Hauptleitung (210) der Kühleinheit (20) vorgesehen ist, wobei in Abhängigkeit von einem Zustand des zweiten Ventils (710) die Verbindung zwischen der Hauptleitung (210) und der Zirkulationsleitungseinheit (70) geöffnet oder gesperrt ist.

2. Das Meerwasser-Zirkulationssystem nach Anspruch 1, wobei die Zufuhrrohreinheit (50) eine zweite Pumpe (510) zum Pumpen des Meerwassers aus der ersten Ableitungsrohreinheit (40) aufweist.

3. Das Meerwasser-Zirkulationssystem nach Anspruch 1, wobei der Wärmeerzeugungskörper (211) mindestens einen von einem Ölkühler, einem Luftkühler und einem Motorkühlmittelkühler umfasst.

4. Das Meerwasser-Zirkulationssystem nach Anspruch 2 umfasst ferner eine mit der zweiten Ableitungsrohreinheit (60) gekoppelte Abscheideeinheit (610) zur Abscheidung von Verunreinigungen, die im Meerwasser enthalten sind, das aus der Scrubbereinheit (30) abgeleitet wird.

## Revendications

1. Un système de circulation d'eau de mer (1) pour un navire, le système de circulation d'eau de mer comprenant :
une prise d'eau de mer (10) pour pomper d'eau de mer à partir de la mer ;
une unité de refroidissement (20) couplée à la prise d'eau de mer (10) pour recevoir l'eau de mer de la prise d'eau de mer (10), et partiellement couplée à un corps de génération de chaleur (221) pour abaisser une température du corps de génération de chaleur (221) par échange de chaleur ;
une unité d'épuration (30) pour traiter un gaz d'échappement généré dans le navire ;
une première unité tuyau d'évacuation (40) pour évacuer l'eau de mer évacuée de l'unité de refroidissement (20) vers l'extérieur ;
une unité tuyau d'alimentation (50) couplée à la première unité tuyau d'évacuation (40) et à l'unité d'épuration (30) pour fournir une partie ou la totalité de l'eau de mer évacuée de l'unité de refroidissement (20) à l'unité d'épuration (30) ;
une seconde unité tuyau d'évacuation (60) couplée à l'unité d'épuration (30) et à la première unité tuyau d'évacuation (40) pour évacuer l'eau de mer de l'unité d'épuration (30) vers la première unité tuyau d'évacuation (40) ;
une première pompe (211) prévue dans l'unité de refroidissement (20) pour pomper l'eau de mer à partir de la prise d'eau de mer (10) ;
dans lequel une première vanne (411) pour régler un débit est prévue entre la première unité tuyau d'évacuation (40) et l'unité tuyau d'alimentation (50) ; **caractérisé en ce qu'**il comprend
une unité tuyau de circulation (70) dont les deux extrémités sont couplées à l'unité de refroidissement (20), qui est située entre la première pompe (211) et le corps de génération de chaleur (221), pour permettre à l'eau de mer de circuler à travers celle-ci,
dans lequel l'unité tuyau de circulation (70) est au moins partiellement située à l'intérieur ou à l'extérieur de la première unité tuyau d'évacuation (40) pour abaisser une température de l'eau de mer située dans la première unité tuyau d'évacuation (40), et présente un chemin d'écoulement qui est plus petit qu'un chemin d'écoulement de l'unité de refroidissement (20) pour recevoir une partie de l'eau de mer située dans l'unité de refroidissement (20),
dans lequel une seconde vanne (710) pour régler un débit est prévue entre l'unité tuyau de circulation (70) et un tuyau principal (210) de l'unité de refroidissement (20), dans lequel, en fonction d'un état de la seconde vanne (710), la communication entre le tuyau principal (210) et l'unité tuyau de circulation (70) est ouverte ou bloquée.

2. Le système de circulation d'eau de mer selon la revendication 1, dans lequel l'unité tuyau d'alimentation (50) possède une seconde pompe (510) pour pomper l'eau de mer à partir de la première unité tuyau d'évacuation (40).

3. Le système de circulation d'eau de mer selon la revendication 1, dans lequel le corps de génération de chaleur (211) comporte au moins un d'un refroidisseur d'huile, d'un refroidisseur d'air et d'un refroidisseur de liquide de refroidissement du moteur.

4. Le système de circulation d'eau de mer selon la revendication 2, comprenant en outre une unité de séparation (610) couplée à la seconde unité tuyau d'évacuation (60) pour séparer les contaminants contenus dans l'eau de mer qui est évacuée de l'unité d'épuration (30).
